# EUROPEAN PATENT SPECIFICATION

(11) **EP 0 383 757 B1**
(45) Date of publication and mention of the grant of the patent: **07.07.1993**
(21) Application number: 88903147.2
(22) Date of filing: 13.04.1988
(51) Int. Cl.: B60C 23/04, B60C 29/00

(54) **PRESSURE INDICATING VALVE STEM**
DRUCKANZEIGENDER VENTILSCHAFT
TUBULURE DE VALVE INDICATRICE DE PRESSION

(43) Date of publication of application: 29.08.1990
(73) Proprietor: VAN LEEUWEN, Nelda, Faith, Kempsey, NSW 2440 (AU); VAN LEEUWEN, Johannes, Kempsey, NSW 2440 (AU)
(72) Inventor: VAN LEEUWEN, Johannes, Kempsey, NSW 2440 (AU)
(74) Representative: Smulders, Theodorus A.H.J., Ir.
(86) International application number: AU8800104
(87) International publication number: WO8909700

(56) References cited:
- US-A- 2 255 932
- US-A- 2 798 450
- US-A- 3 230 968

## Description

### FIELD OF THE INVENTION

This invention relates to valves for the inflation of tubeless pneumatic tyres for motor vehicles and other wheeled equipment. Such valves are currently available in two configurations, known respectively as "snap-in" and "clamp-in" valves.

Both types comprise a central valve core, which itself comprises a valve body incorporating a seat and a spring-loaded valve element co-acting with that seat, screwed as a plug into a tubular core holder.

In the case of snap-in valves the core holder is bonded to an elastomeric outer base so shaped that, on insertion into the valve aperture in the rim of a conventional vehicle wheel, its retention in, and airtight seal with the rim, is effected. In the case of the clamp-in type, the core holder is flanged at its lower end, threaded externally and by means of a rubber grommet, rubber and metal washers and clamping nut, may be secured airtightly in the rim's valve aperture. In each case the core holder and associated components referred to, except for the core, are known as a valve stem.

It is well known that tyre life and vehicle safety depend largely on tyres being maintained at the recommended inflation pressure, which varies with the vehicle-tyre combination, tyre location on the vehicle and operating conditions.

Thus gauges are available which may be applied to the open upper end of the core holder of a tyre valve which, by depressing the spring-loaded valve element of the valve core, become pressurised and indicate the pressure obtaining in the tyre.

It is also well known that such gauges often become inaccurate with use, that motorists frequently take a risk an their tyre pressures being correct rather than go to the trouble of finding and using a gauge, and that occasionally a sealed valve commences to leak following the disturbance caused by use of a gauge.

### DESCRIPTION OF THE PRIOR ART

Thus various proposals have been suggested for the provision of valve stems, or screw-on caps therefor, which include built-in devices for indicating whether or not the tyre is correctly inflated. For the most part such prior proposals have included spring loaded pistons sliding in cylinders exposed to the air pressure within the tyre. The correctness or otherwise of the pressure is then indicated by the position of the piston working against the effect of the loading spring. Those proposals have been unsatifactory because the components additional to those of a standard non-indicating stem, for example, the loading spring, have increased the manufacturing and assembly costs and the tendency for seals either to leak or to seize up has caused them to be unreliable. The indicating valve of U.S. Patent 3906988 overcomes the sealing problem by utilising a pliable or flexible diaphragm instead of a cylinder but still incorporates a loading spring. Other prior art disclosures known to applicant but thought to be less relevant are U.S. patent specifications 4310014, 4103549 and 4606391. Finally the US-A- 3 230 968 discloses a pneumatic tyre inflation valve stem according to the preamble of claim 1.

### SUMMARY OF THE INVENTION

The present invention was devised to provide a continuous, visible, reliable indication of the correctness or otherwise of a tyre's inflation pressure by particularly simple means, incurring very little additional material cost by comparison with a standard non-indicating stem and fewer assembly steps in manufacture by comparison with known indicating stems. The invention achieves that object by utilising a moulded elastomeric support for a moveable valve core holder which functions as both the seal between the holder and the wheel rim and the means providing a yieldable restraining force on the holder.

The invention consists in a pneumatic tyre inflation valve stem of the kind comprising a tubular, rigid valve core holder, a rigid mounting sleeve in which said holder is telescopically slidable, affixture means fixedly supporting said mounting sleeve and adapted to be secured airtightly within the valve aperture of a wheel rim, sealing means providing an airtight connection between said affixture means and said holder and loading means elastically restraining the movement of said holder, characterised in that said sealing means comprise a yieldable elastomeric diaphragm of sufficient stiffness to provide all of the elastic restraint on said holder.

### BRIEF DESCRIPTION OF THE DRAWINGS

Figure 1 is a quarter-sectioned side elevation of a tubeless, pneumatic tyre valve stem according to the invention, drawn to an enlarged scale.

Figure 2 is a view similar to figure 1 of a second valve stem according to the invention.

Figure 3 is a view similar to figure 1 of a third valve stem according to the invention.

### DESCRIPTION OF THE PREFERRED EMBODIMENTS

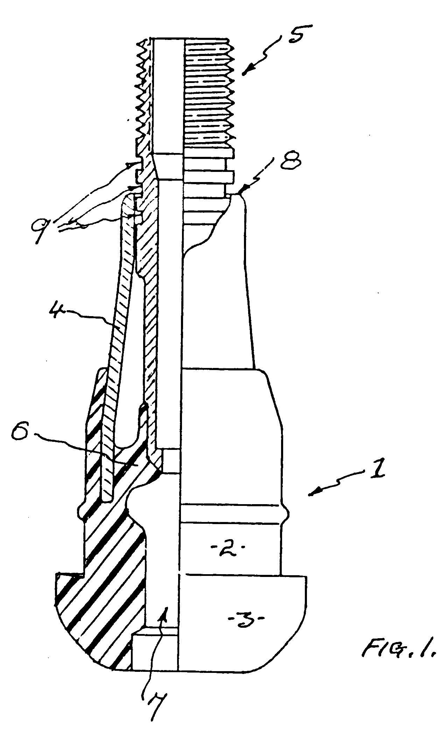

The valve stem illustrated by fig. 1 is of the "snap-in" type. It comprises a resilient rubber affixture means 1 of conventional shape, including a cylindrical neck 2 which fits tightly through a clearance hole in a wheel rim and a retaining head 3.

The affixture means 1 is surmounted by a rigid plastics or metal tapered mounting sleeve 4 in which a rigid valve core holder 5 is able to move axially up and down.

The core holder 5 is attached at its lower end to the interior of the rubber affixture means 1 by sealing means comprising an annular, yieldable elastomeric diaphragm 6 integral with the affixture means 1 and bonded to the core holder 5.

An air passage 7 through the centre of the affixture means 1 connects with a central passage of the holder 5 which is machined to take a standard valve core (not shown).

As pressure varies in the tyre and hence in the air passage 7 the diaphragm 6 elastically yields, permitting the holder 5 to rise or fall relative to the rim 8 of sleeve 4 as the pressure within the tyre changes.

Three colour coded rings 9, recessed in the holder 5 where it protrudes from the sleeve 4, indicate whether the tyre is under-inflated, correctly inflated (to the nominal pressure for this embodiment) or over-inflated, depending on which coloured ring is level with the rim of the sleeve 4.

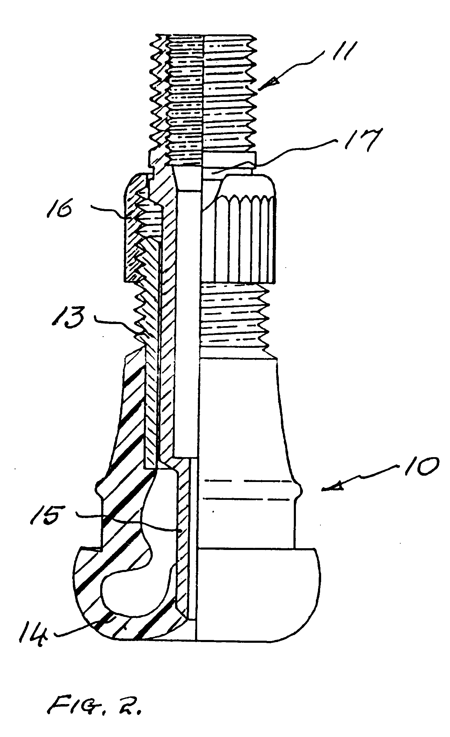

The fig. 2 embodiment is similar to the fig. 1 embodiment and comprises affixture means 10, core holder 11, and sleeve 13 all corresponding in function to the affixture means 1, holder 5 and sleeve 4 of the fig. 1 embodiment.

In this instance, however, the sealing means comprise an annular end wall 14 of the affixture means 10 bonded to an extended end portion 15 of the core holder 11. The end wall 14 in more flexible than the diaphragm 6 of the fig. 1 embodiment to provide greater movement of the holder 11.

Furthermore the sleeve 13 is furnished with a ring-nut 16 which may be advanced or retracted to provide for adjustment of the effective length of the sleeve 13.

The core holder 11 may be furnished with an indicator ring 17.

At an initial inflation of the tyre to its correct pressure, the ring-nut may be positioned so that its rim coincides with the ring 17. Thereafter any change in pressure will be indicated by the departure of the ring 17 from its coincidence with the rim of the nut 16. Thus this embodiment may be adjusted to suit a range of nominal pressures instead of the one set pressure of the fig. 1 embodiment.

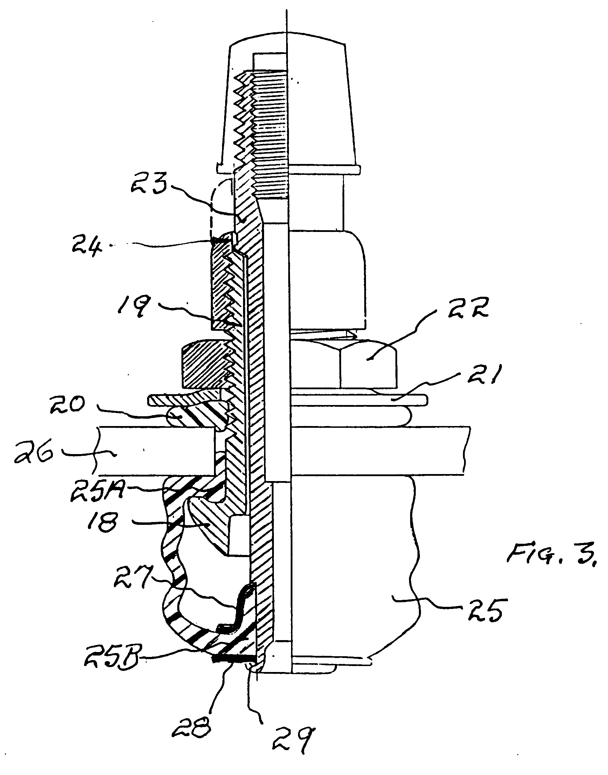

The fig. 3 embodiment is a "clamp-in" valve stem. To that end its affixture means comprise a radially projecting flange 18 on a mounting sleeve 19, an elastomeric sealing washer 20, a rigid clamping washer 21 and a clamp nut 22.

The mounting sleeve 19 has a ring-nut 23 corresponding to the ring-nut 16 of the fig. 2 embodiment.

In this embodiment the sealing means between the sleeve 19 and core holder 23 is a resilient, elastomeric, generally tubular boot 25.

One end margin 25A of the boot 25 is clamped between flange 18 and a wheel rim 26 and is thereby air-tightly held to the affixture means, of which, indeed, it constitutes a component.

The other end margin 25B of the boot 25 is sealed to the core holder 23. It is clamped between a hat washer 27 and a plain washer 28 and held therewith as a fixed assembly by a swaged over rim 29 on the adjacent end of the core holder 23.

## Claims

1. A pneumatic tyre inflation valve stem of the kind comprising a tubular, rigid valve core holder (5,11,23), a rigid mounting sleeve (4,13,19) in which said holder (5,11,23) is telescopically slidable, affixture means (1,10,25) fixedly supporting said mounting sleeve (4,13,19) and adapted to be secured airtightly within the valve aperture of a wheel rim, sealing means providing an airtight connection between said affixture means and said holder and loading means elastically restraining the movement of said holder, characterised in that said sealing means comprise a yieldable elastomeric diaphragm (6,14,25) of sufficient stiffness to provide all of the elastic restraint on said holder (5,11,23).

2. A valve stem according to Claim 1 of the snap-in type, wherein said affixture means (1) comprises an elastomeric hollow body (1) having a cylindrical neck (2) adapted to fit tightly within said rim aperture and a retaining head (3), further characterised in that said sealing means comprises an annular diaphragm (6) integral with said body (1) and bonded to said core holder (5).

3. A valve stem according to Claim 1 of the snap-in type, wherein said affixture means (10) comprises an elastomeric hollow body (10) having a cylindrical neck (2) adapted to fit tightly within said rim aperture and a retaining head (3), further characterised in that said sealing means comprises a resilient end wall (14) of said body (10) bonded or otherwise air-tightly secured to said core holder (11).

4. A valve stem according to Claim 1 of the clamp-in type, further characterised in that said sealing means is a generally tubular elastomeric boot (25) with one end margin (25B) secured air-tightly to said core holder (23) and its other end margin (25A) secured air-tightly to said affixture means (19).

5. A valve stem according to Claim 1 of the clamp-in type, further characterised in that said sealing means is a generally tubular elastomeric boot (25) with one end margin (25B) secured air-tightly to said core-holder (23) and its other end (25A) margin adapted to be clamped between an annular zone of the wheel rim surface surrounding or defining the aperture therein and a peripheral flange (18) on the mounting sleeve (19).

6. A valve stem according to any one of the preceding claims, further characterised in that said sleeve (13,19) is externally threaded and is furnished with a ring nut (16,24) which may be advanced or retracted to adjust the effective length of the sleeve (13,19).

## Patentansprüche

1. Ein Ventilschaft zum Aufpumpen von Luftreifen von der Art, umfassend: eine rohrförmige, starre Ventileinsatzhalterung (5, 11, 23), eine starre Einbauhülse (4, 13, 19), in der die Halterung (5, 11, 23) teleskopisch verschiebbar ist, Befestigungsmittel (1, 10, 25), die die Einbauhülse (4, 13, 19) befestigt halten und geeignet sind, luftdicht in der Ventilöffnung einer Radfelge befestigt zu werden, Abdichtmittel zur Schaffung einer luftdichten Verbindung zwischen den Befestigungsmitteln und der Halterung und Belastungsmittel, die die Bewegung der Halterung federnd begrenzen,
dadurch gekennzeichnet, daß
die Abdichtmittel eine nachgiebige elastomere Membran (6, 14, 25) von ausreichender Steifigkeit zur Übernahme der gesamten federnden Arretierung auf der Halterung (5, 11, 23) umfassen.

2. Ventilschaft nach Anspruch 1 des Einschnapptyps, bei dem das Befestigungsmittel (1) aus einem elastomeren Hohlkörper (1) mit einem fest in die Felgenöffnung einpaßbaren zylindrischen Hals (2) und einem Haltekopf (3) besteht, ferner dadurch gekennzeichnet, daß das Abdichtmittel eine ringförmige Membran (6) aufweist, die mit dem Körper (1) einstückig und mit der Einsatzhalterung (5) verbunden ist.

3. Ventilschaft nach Anspruch 1 des Einschnapptyps, bei dem das Befestigungsmittel (10) aus einem elastomeren Hohlkörper (10) mit einem fest in die Felgenöffnung einpaßbaren zylindrischen Hals (2) und einem Haltekopf (3) besteht, ferner dadurch gekennzeichnet, daß das Abdichtmittel eine federnde Stirnwand (14) des Körpers (10) aufweist, der mit der Einsatzhalterung (11) verklebt oder auf andere Weise luftdicht daran befestigt ist.

4. Ventilschaft nach Anspruch 1 des Einspanntyps, ferner dadurch gekennzeichnet, daß das Abdichtmittel ein allgemein rohrförmiger, federnder Schaft (25) ist, dessen einer Endrand (25B) luftdicht an der Einsatzhalterung (23) befestigt ist und dessen anderer Endrand (25A) luftdicht an dem Befestigungsmittel (19) befestigt ist.

5. Ventilschaft nach Anspruch 1 des Einspanntyps, ferner dadurch gekennzeichnet, daß das Abdichtmittel ein allgemein rohrförmiger, federnder Schaft (25) ist, dessen einer Endrand (25B) luftdicht an der Einsatzhalterung (23) befestigt und dessen anderer Endrand (25A) geeignet ist, zwischen eine ringförmige Zone der Radfelgenfläche, die die Öffnung darin umgibt oder definiert und einen Umfangsflansch (18) auf der Befestigungshülse (19) geklemmt zu werden.

6. Ventilschaft nach einem der vorhergehenden Ansprüche, ferner dadurch gekennzeichnet, daß die Hülse (13, 19) ein Außengewinde aufweist und mit einer Ringmutter (16, 24) versehen ist, die vor- oder zurückgestellt werden kann, um die zweckmäßige Länge der Hülse (13, 19) einzustellen.

## Revendications

1. Tubulure de valve de gonflage de pneumatique du type comprenant une monture tubulaire rigide de noyau de valve (5,11,23), un manchon de montage rigide (4,13,19) dans lequel ladite monture (5,1,23) peut coulisser télescopiquement, des moyens de fixation (1,10, 25) supportant de façon fixe ledit manchon de montage (4,13,15) et prévus pour être fixés de façon étanche à l'air dans le trou de passage de valve d'une jante de roue, des moyens d'étanchéité assurant une liaison étanche à l'air entre lesdits moyens de fixation et la dite monture, et des moyens de sollicitation retenant élastiquement le mouvement de ladite monture, caractérisée en ce que lesdits moyens d'étanchéité comprennent une membrane en élastomère déformable (6,14,25) de rigidité suffisante pour assurer la totalité de la retenue élastique exercée sur ladite monture (5,11,23).

2. Tubulure de valve suivant la revendication 1, du type à enclenchement, dans laquelle lesdits moyens de fixation (1) comprennent un corps creux en élastomère (1) comportant une partie cylindrique de diamètre réduit (2), qui peut s'ajuster de façon serrée dans ledit trou de la jante, et une tête de retenue (3), caractérisée en outre en ce que lesdits moyens d'étanchéité comprennent une membrane annulaire (6) solidaire dudit corps (1) et liée à ladite monture de noyau (5).

3. Tubulure de valve suivant la revendication 1, du type à enclenchement, dans laquelle lesdits moyens de fixation (10) comprennent un corps creux en élastomère (10) comportant une partie cylindrique de diamètre réduit (2), prévue pour s'ajuster de façon serrée dans ledit trou de la jante, et une tête de retenue (3), caractérisée en outre en ce que lesdits moyens d'étanchéité comprenennt une paroi d'extrémité flexible (14) dudit corps (10) qui est liée ou fixée autrement, de façon étanche à l'air, à ladite monture de noyau (11).

4. Tubulure de valve suivant la revendication 1, du type à serrage, caractérisée en outre en ce que lesdits moyens d'étanchéité sont constitués par une gaine en élastomère sensiblement tubulaire (25), dont un rebord d'extrémité (25B) est fixé de façon étanche à l'air à ladite monture de noyau (29) et dont l'autre rebord d'extrémité (25A) est fixé de façon étanche à l'air auxdits moyens de fixation (19).

5. Tubulure de valve suivant la revendication 1, du type à serrage, caractérisée en outre en ce que lesdits moyens d'étanchéité sont constitués par une gaine en élastomère sensiblement tubulaire (25), dont un rebord d'extrémité (25B) est fixé de façon étanche à l'air à ladite monture de noyau (23) et dont l'autre rebord d'extrémité (25A) est prévu pour être serré entre une zone annulaire de la surface de la jante de roue, entourant ou définissant le trou de la jante, et une collerette périphérique (18) du manchon de montage (19).

6. Tubulure de valve suivant l'une quelconque des revendications précédentes, caractérisée en outre en ce que ledit manchon (13,19) est fileté extérieurement et reçoit un écrou annulaire (16,24) qu'on peut faire avancer ou reculer pour régler la longueur effective du manchon (13,19).
